# FASCICULE DE BREVET EUROPEEN

(11) **EP 4 392 301 B1**
(45) Date de publication et mention de la délivrance du brevet: **28.05.2025**
(21) Numéro de dépôt: 22755257.7
(22) Date de dépôt: 22.07.2022
(51) Int. Cl.: B60W 30/14, B60W 60/00

(54) **PROCÉDÉ ET SYSTÈME POUR PERSONNALISER LE FONCTIONNEMENT D'UN APPAREILLAGE D'AIDE À LA CONDUITE D'UN VÉHICULE AUTOMOBILE**
VERFAHREN UND SYSTEM ZUR PERSONALISIERUNG DES BETRIEBS EINER VORRICHTUNG ZUR UNTERSTÜTZUNG DES FAHRERS EINES KRAFTFAHRZEUGS
METHOD AND SYSTEM FOR PERSONALIZING THE OPERATION OF A DEVICE FOR PROVIDING ASSISTANCE TO THE DRIVER OF A MOTOR VEHICLE

(30) Priorité: 25.08.2021 FR 2108889
(43) Date de publication de la demande: 03.07.2024
(73) Titulaire: Stellantis Auto SAS, 78300 Poissy (FR)
(72) Inventeur: EL HANBALI, Hamza, Sidi Maarouf Casablanca, 20580 (MA); ET-THAQFY, Yassine, Casablanca, 20620 (MA); AIT ALI, Meriem, Casablanca, 20580 (MA); LAHLOU, Zoubida, Casablanca, 20190 (MA)
(74) Mandataire: ESIP
(86) Numéro de dépôt international: PCT/FR2022/051478
(87) Numéro de publication internationale: WO 2023/025998

(56) Documents cités:
- US-A1- 2019 171 204
- US-A1- 2019 322 276
- US-A1- 2021 107 500

## Description

### Domaine technique de l'invention

La présente invention concerne le domaine des systèmes électroniques et informatiques embarqués à bord des véhicules automobiles pour améliorer le confort et l'ergonomie des véhicules. L'invention porte en particulier sur un procédé de gestion, par un système informatique embarqué à bord d'un véhicule automobile, du fonctionnement d'un appareillage d'aide à la conduite du véhicule. L'invention concerne également un système mettant en œuvre un tel procédé. L'invention s'applique, notamment, aux voitures de tourisme, aux véhicules utilitaires, etc.

### État de la technique antérieure

On sait que la plupart des véhicules automobiles actuels sont équipés d'appareillages informatiques et électroniques qui fournissent des fonctionnalités d'aide à la conduite, en particulier des fonctionnalités qui permettent la réalisation automatisée de manœuvres ou de réguler de manière autonome la vitesse des véhicules (e.g. régulateur de vitesse adaptatif, dispositif d'adaptation intelligente de la vitesse, dispositif pour la gestion de manœuvres de changement de voie, etc.). De manière générale, de tels appareillages fonctionnent en exploitant des données générées par des appareils de détection agencés dans les véhicules (e.g. caméra, radar, lidar, etc.), données sur lesquelles ils s'appuient pour fournir les fonctionnalités d'aide à la conduite. On sait par ailleurs que les appareillages d'aide à la conduite connus qui fournissent des fonctionnalités pour prendre en charge de manière autonome la réalisation de manœuvres, par exemple des manœuvres de changement de voie de circulation, réalisent généralement ces manœuvres de manière relativement immuable. Par exemple, lors de la réalisation d'une manœuvre de changement de voie de circulation, l'accélération du véhicule appliquée au cours de la manœuvre par la plupart des appareillages d'aide à la conduite connus va souvent rester la même d'une manœuvre de changement de voie à l'autre, et ce quel que soit le type de route empruntée par le véhicule. Et, pour certains utilisateurs, une telle répétitivité inlassable des mêmes sensations lors des mêmes manœuvres, quel que soit le type de route empruntée, peut être considéré trop rébarbatif, voire créer un sentiment d'inconfort. En outre, un utilisateur qui a l'habitude de conduire doucement peut aussi ressentir un sentiment de manque de confort et d'ergonomie lorsque l'appareillage d'aide à la conduite de son véhicule applique, lors de la réalisation de manœuvres, des accélérations qui s'écartent trop de celles que l'utilisateur applique habituellement de lui-même.

US 2019/322276 décrit un procédé pour limiter la vitesse d'un véhicule circulant dans une courbe comprenant les étapes de : recevoir plusieurs échantillons de données routières, y compris des points de localisation, déterminer une valeur de paramètre pour chacun d'un premier ensemble de paramètres affectant la vitesse du véhicule, sélectionner un modèle de vitesse du véhicule en fonction du premier ensemble de valeurs de paramètres, déterminer une valeur de paramètre pour chacun des paramètres d'un deuxième ensemble affectant la vitesse du véhicule, calculer une vitesse recommandée pour le véhicule pour au moins un des échantillons de route en fonction du modèle sélectionné et des valeurs des paramètres du deuxième ensemble de paramètres affectant la vitesse du véhicule et fournir une instruction pour adapter la vitesse du véhicule à la vitesse recommandée au point de localisation d'au moins un échantillon de route.

US 2019/171204 décrit un procédé de commande d'un véhicule à conduite automatique commutable entre une conduite manuelle dans laquelle le véhicule est amené à se déplacer en fonction d'une opération d'un occupant et une conduite automatique dans laquelle des caractéristiques de conduite en déplacement automatique sont définies et le véhicule est amené à se déplacer automatiquement sur la base des caractéristiques de conduite. Les caractéristiques de conduite manuelle lors de la conduite manuelle par l'occupant sont apprises et, lors du passage de la conduite manuelle à la conduite automatique, la conduite automatique est effectuée avec les caractéristiques de conduite manuelle maintenues pendant un temps de maintien des caractéristiques manuelles prédéfini.

### Résumé de l'invention

L'invention vise à pallier ces inconvénients. L'invention a en effet pour but de fournir un procédé et un système qui permettent de personnaliser le fonctionnement d'un appareillage d'aide à la conduite d'un véhicule automobile en tenant compte des habitudes de conduite des utilisateurs du véhicule, notamment pour la prise en charge autonome de la réalisation de manœuvres. Par ce biais, l'invention vise à améliorer le confort et l'ergonomie des véhicules automobiles.

Ces buts sont atteints, selon un premier objet de l'invention, au moyen d'un procédé de gestion, par un système informatique embarqué à bord d'un véhicule automobile, du fonctionnement d'un appareillage d'aide à la conduite du véhicule, selon la revendication 1. Le procédé comprend les étapes de :
i) déterminer des données caractérisant, pour chacune des voies de circulation d'un ensemble de voies de circulation empruntées par le véhicule, le type de voie de circulation ;
ii) déterminer des données caractérisant, pour chaque voie de circulation de l'ensemble de voies de circulation empruntées par le véhicule, au moins une valeur extrême relative à la cinématique du véhicule sur la voie de circulation ;
iii) alimenter un module d'apprentissage profond avec les données caractérisant, pour chaque voie de circulation d'un ensemble de voies de circulation empruntées par le véhicule, le type de voie de circulation et avec les données caractérisant, pour chaque voie de circulation de l'ensemble de voies de circulation empruntées par le véhicule, au moins une valeur extrême relative à la cinématique du véhicule sur la voie de circulation afin de générer des données caractérisant, pour chaque type de voie de circulation, une estimation d'au moins une valeur extrême relative à la cinématique du véhicule ; et
iv) gérer le fonctionnement de l'appareillage d'aide à la conduite en fonction de données caractérisant un type de voie de circulation empruntée par le véhicule à l'instant courant et des données caractérisant, pour chaque type de voie de circulation, une estimation d'au moins une valeur extrême relative à la cinématique du véhicule.

Selon une variante avantageuse, l'étape i), l'étape ii) et l'étape iv) peuvent comprendre une étape consistant à interagir avec un appareillage de navigation du véhicule et/ou avec un appareillage de reconnaissance de panneaux de signalisation du véhicule. Selon une autre variante, les données caractérisant, pour chaque voie de circulation de l'ensemble de voies de circulation empruntées par le véhicule, au moins une valeur extrême relative à la cinématique du véhicule sur la voie de circulation peuvent inclure des données caractérisant au moins une valeur de l'accélération instantanée du véhicule, des données caractérisant au moins une valeur du taux de variation instantané de l'accélération du véhicule et des données caractérisant au moins une valeur de la vitesse instantanée du véhicule.

Selon l'invention, l'étape ii) comprend une étape consistant à déterminer si la valeur absolue du taux de variation instantané de l'accélération du véhicule est non nulle.

Selon l'invention, l'étape i) et l'étape iv) comprennent une étape consistant à déterminer des données caractérisant un identifiant d'un conducteur du véhicule.

Selon une autre variante, l'étape consistant à déterminer des données caractérisant un identifiant d'un conducteur du véhicule peut être réalisée en interagissant avec une interface homme-machine du véhicule.

En outre, l'invention a également pour objet un système pour gérer le fonctionnement d'un appareillage d'aide à la conduite d'un véhicule automobile, le système comprenant au moins une unité de traitement d'informations, comprenant au moins un processeur, et un support de stockage de données configurés pour mettre en œuvre un procédé tel que décrit ci-dessus.

De plus, l'invention a aussi pour objet un programme comprenant des instructions de code de programme pour l'exécution des étapes d'un procédé tel que décrit ci-dessus lorsque ledit programme est exécuté sur un ordinateur et/ou un processeur.

Par ailleurs, l'invention a également pour objet un support utilisable dans un ordinateur sur lequel un programme tel que décrit ci-dessus est enregistré.

Enfin, l'invention a aussi pour objet un véhicule automobile comprenant un système tel que décrit ci-dessus.

### Brève description des figures

D'autres caractéristiques et avantages de l'invention apparaîtront à l'examen de la description détaillée ci-après, et des dessins annexés, sur lesquels :
[Fig. 1] est un diagramme fonctionnel d'un système selon l'invention ; et
[Fig. 2] est un organigramme illustrant les étapes d'un procédé selon l'invention.

### Description détaillée de l'invention

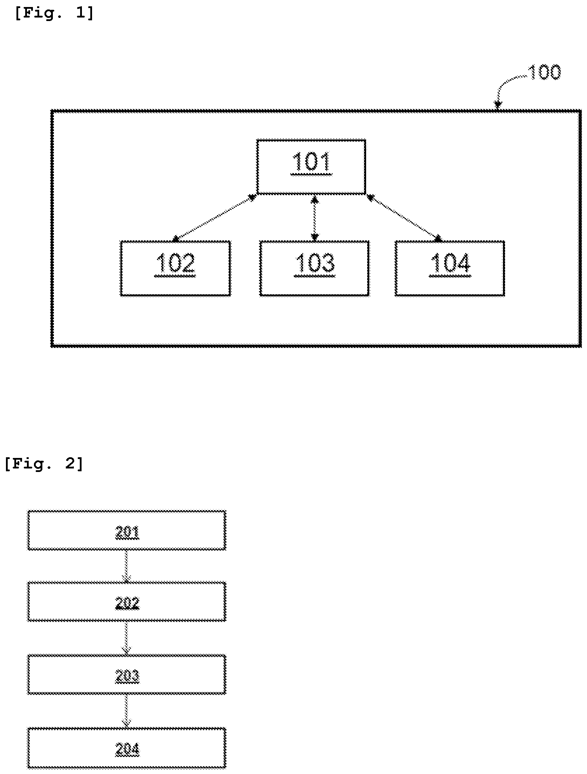

Selon l'invention, un système 100 pour gérer le fonctionnement d'un appareillage d'aide à la conduite d'un véhicule automobile est un système informatique, représenté schématiquement à la figure 1, qui comprend une unité de traitement d'informations 101, comprenant un ou plusieurs processeurs, un support de stockage de données 102, au moins une interface d'entrée et sortie 103, permettant la réception de données et l'émission de données, et un module d'apprentissage profond 104, qui comprend un réseau de neurones, par exemple un perceptron multicouche.

Selon certains modes de réalisation, le système 100 selon l'invention est embarqué dans un véhicule automobile (e.g. voiture, autobus, poids lourd, etc.) et il est hébergé sur un ou plusieurs des calculateurs, unités de commande électroniques ou autres boitiers télématiques du véhicule. Selon d'autres modes de réalisation, le système 100 selon l'invention est hébergé sur un calculateur d'un véhicule automobile et il interagit par le biais de son interface d'entrée et sortie 103 avec un calculateur d'un appareillage d'aide à la conduite d'un véhicule automobile. Selon le mode de réalisation préféré, le système 100 selon l'invention fait partie intégrante d'un calculateur d'un appareillage d'aide à la conduite d'un véhicule automobile. Par conséquent, quel que soit le mode de réalisation de l'invention, le système 100 selon l'invention est toujours en mesure d'interagir, par le biais de son interface d'entrée et sortie 103, non seulement avec un appareillage d'aide à la conduite d'un véhicule automobile, mais également, via un tel appareillage d'aide à la conduite, avec tout autre appareillage qui, de manière conventionnelle, équipe et/ou interagit avec un appareillage d'aide à la conduite d'un véhicule automobile actuel.

Or, selon l'invention, un appareillage d'aide à la conduite d'un véhicule automobile comprend au moins un appareil de détection (e.g. lidar, radar, caméra, capteur à ultrasons, centrale inertielle, accéléromètre, etc.) pour percevoir l'environnement de conduite et un ou plusieurs calculateurs, ordinateurs et/ou processeurs dédiés, qui, en fonction de données brutes générées par le ou les appareils de détection, peuvent contrôler le fonctionnement de certains organes du véhicule qui gouvernent son déplacement (e.g. direction assistée électronique, correcteur électronique de trajectoire, ABS, régulateur de vitesse, etc.). De plus, pour mettre en œuvre certaines étapes du procédé selon l'invention décrit ci-dessous, un appareillage d'aide à la conduite d'un véhicule automobile selon l'invention comprend également un appareillage de reconnaissance de panneaux de signalisation, une interface homme-machine, qui comprend un clavier tactile, un dispositif de reconnaissance faciale et/ou un dispositif de reconnaissance d'empreintes digitales, et il comprend des moyens matériels (e.g. connectique) et logiciels dédiés pour interagir avec un appareillage de navigation d'un véhicule automobile, qui comprend un récepteur interagissant avec un système de positionnement par satellites. Ainsi, en interagissant avec ou en faisant partie intégrante d'un tel appareillage d'aide à la conduite d'un véhicule automobile, le système 100 selon l'invention est notamment en mesure d'assumer le guidage du véhicule lors de la réalisation de manœuvres. De plus, grâce à ces moyens, le système 100 selon l'invention peut également déterminer des données caractérisant, pour chacune des voies de circulation d'un ensemble de voies de circulation empruntées par un véhicule, le type de voie de circulation, ou des données caractérisant, pour chaque voie de circulation de l'ensemble de voies de circulation empruntées par le véhicule, au moins une valeur extrême relative à la cinématique du véhicule sur la voie de circulation (e.g. vitesse, accélération, taux de variation de l'accélération du véhicule, etc.).

Selon l'invention, tous les éléments décrits ci-dessus contribuent donc pour permettre au système 100 selon l'invention de mettre en œuvre, à bord d'un véhicule automobile, un procédé de gestion du fonctionnement d'un appareillage d'aide à la conduite du véhicule, tel que décrit ci-dessous en lien avec la figure 2.

Selon une première étape 201 du procédé selon l'invention, le système 100 selon l'invention détermine des données caractérisant, pour chacune des voies de circulation d'un ensemble de voies de circulation empruntées par le véhicule, le type de voie de circulation. Pour cela, le système 100 selon l'invention procède en déterminant d'abord des données caractérisant un identifiant d'un conducteur du véhicule et, pour ce faire, il interagit avec l'interface homme-machine du véhicule. En effet, lorsqu'un conducteur du véhicule s'installe au poste de conduite, il est préférentiellement invité, par exemple au moyen d'un message visuel diffusé sur un écran de l'interface et/ou au moyen d'un message sonore diffusé par un haut-parleur, à s'identifier, par exemple au moyen du clavier tactile, du dispositif de reconnaissance faciale et/ou du dispositif de reconnaissance d'empreintes digitales de l'interface homme-machine. Lorsque le conducteur s'identifie, ou lorsqu'il est identifié automatiquement par le dispositif de reconnaissance faciale, des données caractérisant un identifiant d'un conducteur du véhicule sont générées par l'interface homme-machine et ces données sont extraites par le système 100 selon l'invention, qui les enregistre sur son support de stockage de données 102 afin de constituer un profil utilisateur pour le conducteur identifié. Ensuite, lorsque le conducteur du véhicule est identifié, le système 100 selon l'invention détermine, en lien avec le conducteur qui a été identifié, les données caractérisant, pour chacune des voies de circulation d'un ensemble de voies de circulation empruntées par le véhicule, le type de voie de circulation. En d'autres termes, le système 100 selon l'invention détermine à chaque instant, en interagissant pour cela avec le système de navigation et/ou avec l'appareillage de reconnaissance de panneaux de signalisation du véhicule, le type de voie de circulation qu'emprunte le véhicule (e.g. autoroute, route nationale, route départementale, etc.). Ainsi, par cette première étape 201 du procédé selon l'invention, le système 100 selon l'invention constitue en réalité des données qui caractérisent, en lien avec un conducteur identifié, des types de voie de circulation empruntés.

Selon une deuxième étape 202 du procédé selon l'invention, le système 100 selon l'invention détermine des données caractérisant, pour chaque voie de circulation de l'ensemble de voies de circulation empruntées par le véhicule, au moins une valeur extrême relative à la cinématique du véhicule sur la voie de circulation. En d'autres termes, pour chaque voie de circulation qu'emprunte le véhicule, que le système 100 selon l'invention détermine au cours de l'étape précédente du procédé, le système 100 selon l'invention détermine au moins une valeur extrême relative à la cinématique du véhicule sur la voie de circulation. En effet, pour chaque voie de circulation empruntée par le véhicule, le système 100 selon l'invention détermine, en interagissant par exemple avec l'appareillage de navigation et/ou avec l'appareillage d'aide à la conduite du véhicule, des données caractérisant au moins une valeur de l'accélération instantanée du véhicule, des données caractérisant au moins une valeur du taux de variation instantané de l'accélération du véhicule et des données caractérisant au moins une valeur de la vitesse instantanée du véhicule. Plus précisément, lorsqu'il détermine que la valeur absolue du taux de variation instantané de l'accélération du véhicule passe d'une valeur nulle à une valeur non nulle, ce qui correspond à une situation dans laquelle le véhicule accomplit une manœuvre au cours de laquelle la vitesse du véhicule augmente ou diminue, le système 100 selon l'invention détermine alors des données caractérisant l'accélération maximale atteinte par le véhicule au cours de la manœuvre, des données caractérisant le taux maximal de variation instantanée de l'accélération atteint par le véhicule au cours de la manœuvre ainsi que des données caractérisant la vitesse instantanée du véhicule à la fin de la manœuvre. Ainsi, par cette deuxième étape du procédé selon l'invention, le système 100 selon l'invention constitue en réalité des données qui caractérisent, pour des manœuvres réalisées, en lien avec une voie de circulation d'un type particulier et un conducteur identifié, le comportement de conduite du conducteur en matière d'accélération et de vitesse du véhicule au cours des manœuvres.

Selon une troisième étape 203 du procédé selon l'invention, le système 100 selon l'invention alimente le module d'apprentissage profond 104 avec les données caractérisant, pour chaque voie de circulation d'un ensemble de voies de circulation empruntées par le véhicule, le type de voie de circulation, qui ont été déterminées au cours de la première étape 201, et avec les données caractérisant, pour chaque voie de circulation de l'ensemble de voies de circulation empruntées par le véhicule, au moins une valeur extrême relative à la cinématique du véhicule sur la voie de circulation, qui ont été déterminées au cours de la deuxième étape 202. Plus précisément, lors de cette troisième étape, le système 100 selon l'invention réalise préférentiellement un entraînement du réseau de neurones du module d'apprentissage profond 104 en utilisant pour ce faire les données précitées, et ce afin de générer des données caractérisant, pour chaque type de voie de circulation, une estimation d'au moins une valeur extrême relative à la cinématique du véhicule, préférentiellement une estimation d'une valeur maximale d'accélération et une estimation d'une valeur maximale du taux de variation instantané de l'accélération du véhicule. En d'autres termes, par cette troisième étape 203, le système 100 selon l'invention constitue avantageusement, pour une pluralité de types de voies de circulation antérieurement empruntées par le véhicule, des données qui caractérisent le comportement de conduite habituel d'un conducteur identifié, notamment en matière d'accélération appliquée lors de la réalisation de manœuvres.

Et, selon une quatrième étape 204 du procédé selon l'invention, le système 100 selon l'invention gère le fonctionnement de l'appareillage d'aide à la conduite en fonction de données caractérisant un type de voie de circulation empruntée par le véhicule à l'instant courant et des données caractérisant, pour chaque type de voie de circulation, une estimation d'au moins une valeur extrême relative à la cinématique du véhicule. Pour ce faire, le système 100 selon l'invention détermine les données caractérisant un type de voie de circulation empruntée par le véhicule à l'instant courant en procédant comme lors de la première étape 201 du procédé, càd. en interagissant avec le système de navigation et/ou avec l'appareillage de reconnaissance de panneaux de signalisation du véhicule. Ensuite, pour déterminer les données caractérisant, pour chaque type de voie de circulation, une estimation d'une valeur extrême relative à la cinématique du véhicule, le système 100 selon l'invention interagit avec l'interface homme-machine du véhicule pour déterminer, comme lors de la première étape 201 du procédé, un identifiant du conducteur du véhicule à l'instant courant. Sur la base de ces données, le système 100 selon l'invention acquiert ensuite, en lien avec le conducteur identifié, les données caractérisant, pour chaque type de voie de circulation, une estimation d'une valeur extrême relative à la cinématique du véhicule, qui ont été déterminées au cours de la troisième étape 203 du procédé. Enfin, c'est en utilisant ces données que le système 100 selon l'invention gère le fonctionnement de l'appareillage d'aide à la conduite du véhicule, notamment qu'il gère le fonctionnement de l'appareillage d'aide à la conduite lors de la réalisation de manœuvres. En d'autres termes, par cette quatrième étape 204 du procédé, le système 100 selon l'invention utilise les données qui ont été précédemment générées par le module d'apprentissage profond 104 en lien avec un conducteur identifié pour gérer le fonctionnement de l'appareillage d'aide à la conduite lors de la réalisation de manœuvres. De manière avantageuse, le système 100 selon l'invention est donc en mesure de gérer la réalisation de manœuvres d'une manière qui reproduit fidèlement le comportement de conduite habituel du conducteur, notamment en matière d'accélération appliquée.

Par conséquent, aux termes du procédé et du système selon l'invention décrits ci-dessus, une solution est fournie pour personnaliser le fonctionnement d'un appareillage d'aide à la conduite d'un véhicule automobile en tenant compte des habitudes de conduite des utilisateurs du véhicule, notamment lors de la prise en charge autonome de la réalisation de manœuvres. Par ce biais, le procédé et le système selon l'invention améliorent donc significativement le confort et l'ergonomie des véhicules automobiles.

## Revendications

1. Procédé de gestion, par un système informatique (100) embarqué à bord d'un véhicule automobile, du fonctionnement d'un appareillage d'aide à la conduite du véhicule, le procédé comprenant les étapes de :
i) déterminer des données caractérisant un identifiant d'un conducteur du véhicule et des données caractérisant, pour chacune des voies de circulation d'un ensemble de voies de circulation empruntées par le véhicule, le type de voie de circulation ;
ii) déterminer, dès lors qu'il est établi que la valeur absolue du taux de variation instantané de l'accélération du véhicule est non nulle, des données caractérisant, pour chaque voie de circulation de l'ensemble de voies de circulation empruntées par le véhicule, au moins une valeur extrême relative à la cinématique du véhicule sur la voie de circulation ;
iii) alimenter un module d'apprentissage profond (104) avec les données caractérisant, pour chaque voie de circulation d'un ensemble de voies de circulation empruntées par le véhicule, le type de voie de circulation et avec les données caractérisant, pour chaque voie de circulation de l'ensemble de voies de circulation empruntées par le véhicule, au moins une valeur extrême relative à la cinématique du véhicule sur la voie de circulation afin de générer des données caractérisant, pour chaque type de voie de circulation, une estimation d'au moins une valeur extrême relative à la cinématique du véhicule ; et
iv) gérer le fonctionnement de l'appareillage d'aide à la conduite en fonction de données caractérisant un identifiant d'un conducteur du véhicule, de données caractérisant le type de voie de circulation empruntée par le véhicule à l'instant courant et des données caractérisant, pour chaque type de voie de circulation, une estimation d'une valeur extrême relative à la cinématique du véhicule.

2. Procédé selon la revendication 1, **caractérisé en ce que** l'étape i), l'étape ii) et l'étape iv) comprennent une étape consistant à interagir avec un appareillage de navigation du véhicule et/ou avec un appareillage de reconnaissance de panneaux de signalisation du véhicule.

3. Procédé selon l'une des revendications précédentes, **caractérisé en ce que** les données caractérisant, pour chaque voie de circulation de l'ensemble de voies de circulation empruntées par le véhicule, au moins une valeur extrême relative à la cinématique du véhicule sur la voie de circulation incluent des données caractérisant au moins une valeur de l'accélération instantanée du véhicule, des données caractérisant au moins une valeur du taux de variation instantané de l'accélération du véhicule et des données caractérisant au moins une valeur de la vitesse instantanée du véhicule.

4. Procédé selon la revendication l'une des revendications précédentes, **caractérisé en ce que** l'étape consistant à déterminer des données caractérisant un identifiant d'un conducteur du véhicule est réalisée en interagissant avec une interface homme-machine du véhicule.

5. Système (100) pour gérer le fonctionnement d'un appareillage d'aide à la conduite d'un véhicule automobile, le système comprenant au moins une unité de traitement d'informations (101), comprenant au moins un processeur, et un support de stockage de données (102) configurés pour mettre en œuvre un procédé selon l'une quelconque des revendications précédentes.

6. Programme d'ordinateur comprenant des instructions de code de programme pour l'exécution des étapes d'un procédé selon l'une quelconque des revendications 1 à 4 lorsque ledit programme est exécuté sur un ordinateur.

7. Support utilisable dans un ordinateur, sur lequel un programme selon la revendication 6 est enregistré.

8. Véhicule automobile, comprenant un système selon la revendication 5.

## Patentansprüche

1. Verfahren zur Steuerung des Betriebs einer Fahrassistenzvorrichtung durch ein Computersystem (100) an Bord eines Kraftfahrzeugs. Das Verfahren umfasst die folgenden Schritte:
i) Ermitteln von Daten, die eine Kennung des Fahrzeugführers charakterisieren, und von Daten, die für jede der vom Fahrzeug benutzten Fahrspuren den Fahrspurtyp charakterisieren;
ii) Ermitteln, sobald festgestellt wurde, dass der Absolutwert der momentanen Änderungsrate der Fahrzeugbeschleunigung ungleich Null ist, von Daten, die für jede der vom Fahrzeug benutzten Fahrspuren mindestens einen Extremwert in Bezug auf die Kinematik des Fahrzeugs auf der Fahrspur charakterisieren;
iii) Ein Deep-Learning-Modul (104) wird mit Daten gespeist, die für jede vom Fahrzeug benutzte Fahrspur den Fahrspurtyp und für jede vom Fahrzeug benutzte Fahrspur mindestens einen Extremwert der Fahrzeugkinematik auf der Fahrspur charakterisieren, um Daten zu generieren, die für jede Fahrspurart eine Schätzung mindestens eines Extremwerts der Fahrzeugkinematik charakterisieren; und
iv) Steuerung des Betriebs der Fahrassistenzausrüstung basierend auf Daten, die eine Kennung des Fahrzeugführers, den aktuell vom Fahrzeug benutzten Fahrspurtyp und für jede Fahrspurart eine Schätzung eines Extremwerts der Fahrzeugkinematik charakterisieren.

2. Verfahren nach Anspruch 1, **dadurch gekennzeichnet, dass** Schritt i), ii) und iv) die Interaktion mit einem Navigationsgerät des Fahrzeugs und/oder einer Verkehrszeichenerkennung des Fahrzeugs umfassen.

3. Verfahren nach einem der vorhergehenden Ansprüche, **dadurch gekennzeichnet, dass** die Daten, die für jede vom Fahrzeug benutzte Fahrspur mindestens einen Extremwert der Fahrzeugkinematik auf der Fahrspur charakterisieren, Daten umfassen, die mindestens einen Wert der momentanen Fahrzeugbeschleunigung, mindestens einen Wert der momentanen Änderungsrate der Fahrzeugbeschleunigung und mindestens einen Wert der momentanen Fahrzeuggeschwindigkeit charakterisieren.

4. Verfahren nach einem der vorhergehenden Ansprüche, **dadurch gekennzeichnet, dass** die Ermittlung von Daten, die eine Kennung eines Fahrzeugführers charakterisieren, durch Interaktion mit einer Mensch-Maschine-Schnittstelle des Fahrzeugs erfolgt.

5. Ein System (100) zur Steuerung des Betriebs einer Fahrerassistenzvorrichtung eines Kraftfahrzeugs, das mindestens eine Informationsverarbeitungseinheit (101) mit mindestens einem Prozessor und ein Datenspeichermedium (102) umfasst, das zur Durchführung eines Verfahrens nach einem der vorhergehenden Ansprüche konfiguriert ist.

6. Ein Computerprogramm mit Programmcodeanweisungen zur Ausführung der Schritte eines Verfahrens nach einem der Ansprüche 1 bis 4, wenn das Programm auf einem Computer ausgeführt wird.

7. Ein in einem Computer verwendbares Medium, auf dem ein Programm nach Anspruch 6 gespeichert ist.

8. Ein Kraftfahrzeug, das ein System nach Anspruch 5 umfasst.

## Claims

1. Method for managing, by a computer system (100) on board a motor vehicle, the operation of a vehicle driving assistance device, the method comprising the steps of:
i) determining data characterizing an identifier of a driver of the vehicle and data characterizing, for each of the traffic lanes of a set of traffic lanes used by the vehicle, the type of traffic lane;
ii) determining, once it is established that the absolute value of the instantaneous rate of change of the acceleration of the vehicle is non-zero, data characterizing, for each traffic lane of the set of traffic lanes used by the vehicle, at least one extreme value relating to the kinematics of the vehicle on the traffic lane;
iii) feeding a deep learning module (104) with data characterizing, for each traffic lane of a set of traffic lanes used by the vehicle, the type of traffic lane and with data characterizing, for each traffic lane of the set of traffic lanes used by the vehicle, at least one extreme value relating to the kinematics of the vehicle on the traffic lane in order to generate data characterizing, for each type of traffic lane, an estimate of at least one extreme value relating to the kinematics of the vehicle; and
iv) managing the operation of the driving assistance equipment based on data characterizing an identifier of a driver of the vehicle, data characterizing the type of traffic lane used by the vehicle at the current time and data characterizing, for each type of traffic lane, an estimate of an extreme value relating to the kinematics of the vehicle.

2. Method according to claim 1, **characterized in that** step i), step ii) and step iv) comprise a step consisting of interacting with a navigation device of the vehicle and/or with a traffic sign recognition device of the vehicle.

3. Method according to one of the preceding claims, **characterized in that** the data characterizing, for each traffic lane of the set of traffic lanes used by the vehicle, at least one extreme value relating to the kinematics of the vehicle on the traffic lane include data characterizing at least one value of the instantaneous acceleration of
the vehicle, data characterizing at least one value of the instantaneous rate of change of the acceleration of the vehicle and data characterizing at least one value of the instantaneous speed of the vehicle.

4. Method according to claim one of the preceding claims, **characterized in that** the step of determining data characterizing an identifier of a driver of the vehicle is carried out by interacting with a human-machine interface of the vehicle.

5. A system (100) for managing the operation of a driving assistance device of a motor vehicle, the system comprising at least one information processing unit (101), comprising at least one processor, and a data storage medium (102) configured to implement a method according to any one of the preceding claims.

6. A computer program comprising program code instructions for executing the steps of a method according to any one of claims 1 to 4 when said program is executed on a computer.

7. A medium usable in a computer, on which a program according to claim 6 is recorded.

8. A motor vehicle, comprising a system according to claim 5.
